# EUROPEAN PATENT APPLICATION

(11) **EP 2 363 784 A2**
(43) Date of publication of application: **07.09.2011**
(21) Application number: 11151736.3
(22) Date of filing: 21.01.2011
(51) Int. Cl.: G06F 3/01, G06F 1/16

(54) **Personal listening device having input applied to the housing to provide a desired function and method**

(30) Priority: 21.02.2010 US 306544 P; 08.12.2010 US 963004
(71) Applicant: Sony Ericsson Mobile Communications AB, 221 88 Lund (SE)
(72) Inventor: Bunk, Johan Richard, SE-247 60, VEBERÖD (SE)
(74) Representative: Ström & Gulliksson AB

(57) **Abstract**

A personal listening device, such as an earbud or earphone, includes a housing, a speaker in the housing to provide sound output and a sensor to detect mechanical input applied to the housing, such as tapping or squeezing, to provide a desired signal and/or function response and method. The speaker may be used as the sensor along with a filter to sense the expected mechanical inputs while separating other sounds normally produced by the speaker.

## Description

### CROSS-REFERENCE TO RELATED APPLICATION

This application claims the benefit of U.S. Provisional Patent Application Serial No. 61/306,544, filed February 21, 2010, the entire disclosure of which is hereby incorporated by reference.

### TECHNICAL FIELD

The present invention relates generally to electronic equipment having an input applied to the housing to provide a desired function and method, and, more particularly, to a personal listening device that may be tapped or otherwise provided with an input to the housing to provide a desired signal and/or function and method.

### BACKGROUND

Mobile and/or wireless electronic devices are becoming increasingly popular. For example, mobile telephones, portable media players and portable gaming devices are now in wide-spread use. In addition, the features and accessories associated with certain types of electronic devices have become increasingly diverse. To name a few examples, many electronic devices have cameras, text messaging capability, Internet browsing capability, electronic mail capability, video playback capability, audio playback capability, image display capability and hands free headset interfaces.

A problem today occurs in providing inputs to a personal listening device used with a mobile phone or with other electronic device, such as a portable electronic device, in designing such portable listening device, finding a button to press to provide an input to the portable listening device, for example, as are mentioned further below.

### SUMMARY

Briefly, according to an aspect of the invention, a personal listening device, includes a housing, a speaker, and a sensor configured to provide an output representative of an input applied to the housing.

According to another aspect, the sensor is configured to detect a sudden abrupt change causing a disturbance to the housing.

A further aspect includes a filter for preventing the providing of such an output in response to relatively long, slow inputs to the housing.

According to another aspect, the sensor is configured to provide a prescribed output in response to a tapping force applied to the housing.

According to another aspect, the sensor comprises a capacitive coupling device configured to provide a prescribed output representative of capacitive coupling with a user of the device.

According to another aspect the sensor is configured to provide an output representative of a squeezing of the housing.

According to another aspect, the sensor includes a force transducer.

According to another aspect the sensor includes a mechanical impulse sensor.

According to another aspect, the sensor includes a strain gage.

According to another aspect, the sensor includes an accelerometer.

According to another aspect, the sensor is configured to detect a sudden change in the location of the housing.

According to another aspect, the device is configured to be worn on the head of a person, and the sensor is configured to sense motion of the head of such person.

According to another aspect, the sensor includes a microphone.

According to another aspect the microphone is in the housing.

According to another aspect, the sensor includes the speaker and filter circuitry and/or filtering software to distinguish between signals representing usual sounds to be output by the speaker and disruptive mechanical inputs applied to the housing.

Another aspect further includes a filter configured to pass signals representative of prescribed inputs applied to the housing.

According to another aspect, the filter includes a circuit.

According to another aspect, the filter includes software.

According to another aspect the filter is in the personal listening device.

According to another aspect, the filter is in a portable electronic device with which the personal listening device is used.

Another aspect includes a memory configured to store information representing the character of respective mechanical inputs and respective functions to be carried out in response to the occurrence of such respective mechanical inputs.

According to another aspect, the memory includes a look up table to provide a reference profile of inputs for comparison.

According to another aspect the look up table includes a correspondence between inputs and functions to be carried out in response to such inputs.

According to another aspect, the inputs include at least one single input or a sequence of inputs.

Another aspect includes a processor configured to compare the character of sensed mechanical inputs with information representing the character of respective mechanical inputs from the memory, and in response to a correlation to carry out a corresponding function.

According to another aspect, the personal listening device is coupled with a mobile phone to provide signals thereto to effect operation, control or the like thereof.

According to another aspect the foregoing are applicable to electronic devices other than personal listening devices.

Briefly, according to another aspect of the invention, an electronic device includes a housing and a sensor configured to provide an output representative of an input applied to the housing.

According to another aspect, the input is a mechanical input applied to the housing.

Briefly, according to another aspect, a method of providing a signal for operating a device comprises applying an input to a housing of the device and sensing the input applied to the housing for use in providing a control or operational function of the device or of a remote device.

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### BRIEF DESCRIPTION OF THE DRAWINGS

In the annexed drawings:
Fig. 1 is a schematic illustration of a personal listening device with a sensor to provide an output representative of a mechanical input and a portable electronic device used with the personal listening device;
Fig. 2 is an illustration of a headset including a pair of earphone speakers as an example of a personal listening device;
Fig. 3 is an illustration of ear buds as another example of a personal listening device;
Fig. 4 is a schematic block diagram or logic diagram illustrating exemplary steps using a personal listening device;
Figs. 5 and 6 are the respectively schematic front and side elevation views of a mobile phone type of portable electronic device;
Fig. 7 is a schematic system diagram of the mobile phone of Figs. 5 and 6; and
Figs. 8-10 are schematic illustrations of several embodiments of personal listening device.

### DESCRIPTION

The interchangeable terms "electronic equipment" and "electronic device" include portable radio communication equipment. The term "portable radio communication equipment," which hereinafter is referred to as a "mobile radio terminal," as "portable electronic equipment," or as a "portable communication device," includes all equipment such as mobile telephones, pagers, communicators, electronic organizers, personal digital assistants (PDAs), smart phones, portable communication apparatus or the like.

In the present application, embodiments of the invention are described with respect to a personal listening device, e.g., an earphone, headphone, ear bud, and so on, and also in the context of a portable electronic device in the form of a mobile telephone (also referred to as "mobile phone"). However, it will be appreciated that the invention is not intended to be limited to the context of a mobile telephone and may relate to any type of appropriate electronic equipment, examples of which include a media player, a gaming device, PDA and a computer, digital cameras, etc.

Prior personal listening devices, e.g., earphones or ear pieces that are coupled by a Bluetooth connection to a mobile phone, typically have a button located on the housing. A user may press the button to cause a given action, e.g., to answer or to hang up a phone call or to adjust volume. A problem with such devices is that a user may have difficulty locating the button while wearing the earphone on the ear. Also, the user may have difficulty properly pressing the button without knocking off the earphone from the ear, and this problem is further exacerbated if the button has to be pressed sequentially several times. Also, such buttons may limit aesthetic designs, may increase assembly costs and be a movable part that could be subject to failure if improperly used or the earphone is dropped, and so on.

An improvement in personal listening devices and the like to overcome and/or to reduce one or more of the above problems is needed.

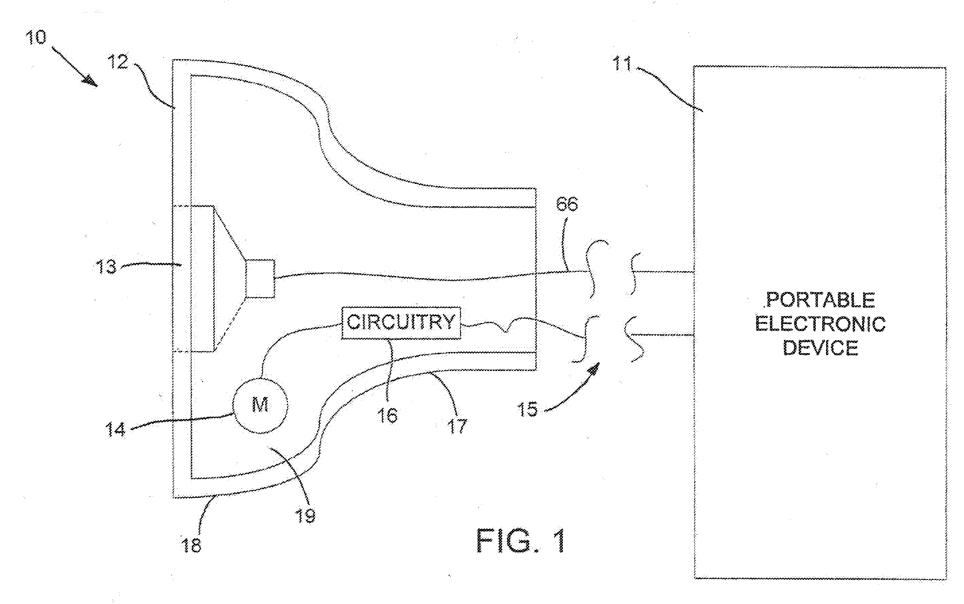

Referring to the drawings, wherein like reference numerals designate like parts in the several figures, and initially to Fig. 1, a personal listening device 10 is illustrated in connection with a portable electronic device 11. The portable electronic device will be referred to below as a mobile phone. However, it will be appreciated that the portable electronic device may be some other type of device, such as, for example, a personal digital assistant (PDA), or other device such as those mentioned above, for example.

The personal listening device 10 includes a housing 12, speaker 13, and sensor 14. The sensor 14 is of a type and/or is configured to provide an output representative of a mechanical input that is applied to the housing 12. The sensor 14 provides such output directly or indirectly to the portable electronic device, as is described in further detail below. For example, an electrical connection 15 may be provided directly from the sensor 14 to the portable electronic device 11. Alternatively, the sensor 14 may provide the output via interface circuitry 16, which is schematically illustrated in the personal listening device 10. As will be appreciated, the sensor 14 (also referred to as a detector) may be any device that receives a signal or stimulus, e.g., such as those described herein or others, and responds to it in a distinctive manner. The interface circuit 16 may include computer program software (sometimes referred to as logic, logic instructions, logic steps, and so on), as is described further below. Also, as an alternative, the interface circuitry 16 and associated computer program software may be partly or wholly in the portable electronic device 11, as also will be described below. As a further alternative, the interface circuitry 16 may be eliminated and functions of discerning outputs from the sensor 14 may be carried out by the portable electronic device 11.

The housing 12 includes a relatively narrow diameter neck portion 17 that may, for example, fit in the ear canal of a user, a relatively wider diameter portion 18 that may be located in the area of the ear but outside of the ear canal, and an interior 19 in which parts of the personal listening device may be contained, as is described further below. The personal listening device 10 is shown as a device inserted into the ear, but it will be appreciated that the device 10 may be located fully outside the ear, e.g., as in the style of conventional Bluetooth coupled speaker devices used in connection with mobile phones or the like. Furthermore, as is illustrated there is a wire connection 15 between the personal listening device 10 and the mobile phone 11; but it will be appreciated that the personal listening device may be coupled via Bluetooth or some other type of connection that is wireless to the mobile phone 11.

The sensor 14 may be mounted or positioned inside the volume space within the housing 12 of the personal listening device 10. Alternatively, the sensor 14 may be mounted on a surface of the housing 12, e.g., on the inside surface facing the mentioned volume space or on the outside surface of the housing. The sensor 14 may be buried, e.g., molded within, the material of which the housing 12 is formed. It will be appreciated that a button is not required to provide an input to the sensor; rather the sensor responds to mechanical inputs applied to the housing 12. Examples of such mechanical inputs are described below; summarizing, they may be, for example, a tapping on the outside surface of the housing 12 to produce a sound sensed by a microphone type the sensor 12, a force, a motion or an acceleration sensed by an force sensor or accelerometer type sensor; an electrical input such as an electrostatic or capacitive effect resulting from placing or moving the personal listening device relative to the ear of a user. The external configuration of the personal listening device does not have to be designed with consideration given to placement of a movable button that has to be pressed by a user; no button is needed.

In the embodiment illustrated in Fig. 1, the sensor 14 is a microphone. The sensor 14 also may be referred to as a detector. The terms sensor and detector and the terms sense and detect (and the like) may be used equivalently, e.g., synonymously or substantially synonymously herein unless otherwise evident from context or from express statement. The microphone 14 is configured or is adapted to sense or to detect sound in the personal listening device 10. The sensor 14 alone and/or in cooperative relation with the circuitry and/or software 16 is configured to detect mechanical inputs (also sometimes referred to as disturbances) that are applied to the housing 12. Signals that represent the output from the sensor 14 and/or circuitry/software 16 are provided to the portable electronic 11. The portable electronic device 11 may respond to such signals and in response thereto may carry out respective functions of the portable electronic device.

Examples of manual inputs applied to the housing 12 to be detected by the sensor 14 may include tapping, such as, for example, manual tapping by a finger nail, finger, tool and so on; an action providing a force to the housing; a distinct motion of the housing; an electrostatic or capacitive coupling effect, e.g., as may occur when inserting or moving the personal listening device with respect to the ear , ear canal, and so on for use while the personal listening device is in use; a squeezing or distorting of the housing; and so on. The sensor 14 may be appropriate to sense the type of mechanical input to which the personal listening device is intended to be responsive. Several examples are described herein and are illustrated in the drawings; it will be appreciated that these are exemplary only and that other mechanical inputs can be provided to the housing 12 to cause disturbances that can be detected by the sensor 14.

Thus, it will be appreciated that the disturbance may be a result of a knock, tap, finger pushing, position change, acceleration, pushing into an ear canal, moving, and so on that can be sensed by the sensor 14. A microphone sensor collects the sound as a result of the disturbance. An accelerometer detects sudden position changes. An electric field or capacitive coupling device type sensor may sense occurrence and/or changes in electric field and/or capacitive coupling between the personal listening device 10 and electrically conductive and/or dielectric material at or adjacent a person's ear. Earphones or other personal listening devices 10, as described herein, are capable of selecting functions by simply tapping on them with a finger of the user; no buttons are required. The tapping may be at any location on the housing of the personal listening device or, if desired, at specified generally locations of the personal listening device. For example, as is described herein, by detecting sudden, abrupt changes caused in an earphone's environment, e.g., by tapping of a finger on the earphone or by some other input to the housing of the earphone. Such changes will cause disturbances in the earphone's coupling to its surroundings, e.g., acoustical, mechanical and/or electrical. The detected coupling signal to its surroundings, e.g., the result of the tapping show patterns typical to a tapping action, as opposed to other natural fluctuations, and such detected coupling signal can be analyzed and the result of the analysis can be used for a control function or the like.

Earphones normally will not be exactly fitted in the ear canal or optimally positioned over the ears of a user; and they will experience fluctuations in position and in coupling to the local surroundings. However, these variations can be distinguished from sudden, intentional changes, such as by tapping on the earphones with a finger, fingernail, tool, and so on; and such abrupt changes can be detected and used, as was mentioned just above.

Signal analysis can easily identify such tapping or other disturbance caused by a an input to the housing of the personal listening device as compared to involuntary fluctuations, e.g., background noise and usual sounds intended to be output by the personal listening device, such as speech, music, and so on. Pulse, wavelet, and/or peak analysis methods are abundant and capable of operating in real time to carry out such signal analysis to lead to detecting that a control or other function is to be provided by the personal listening device.

Various sensor technologies can be used in the personal listening device, depending on the choice of coupling signal and availability in pre-existing and/or new earphone types, including, for example:
Detection of acoustic disturbances, e.g., with an integrated microphone sensor 14 in the personal listening device 11. For example, the microphone sensor 14 may be anywhere along the earphone surface inside or outside the earphone housing; or it may be within the volume enclosed by the housing; or it may buried or molded within the material of which the housing is made; and so on. The microphone need not be a sophisticated type, as its primary purpose is to detect sudden, relatively large disturbances or pulses.
Detection of mechanical disturbances using a mechanical impulse sensor, accelerometer or the like, which responds to impulse type force and/or impulse type motions provided to the personal listening device 10.
Detection of disturbances in the electrical coupling of the personal listening device to its surroundings, e.g., electrostatic or capacitive coupling to the ear canal of the user.

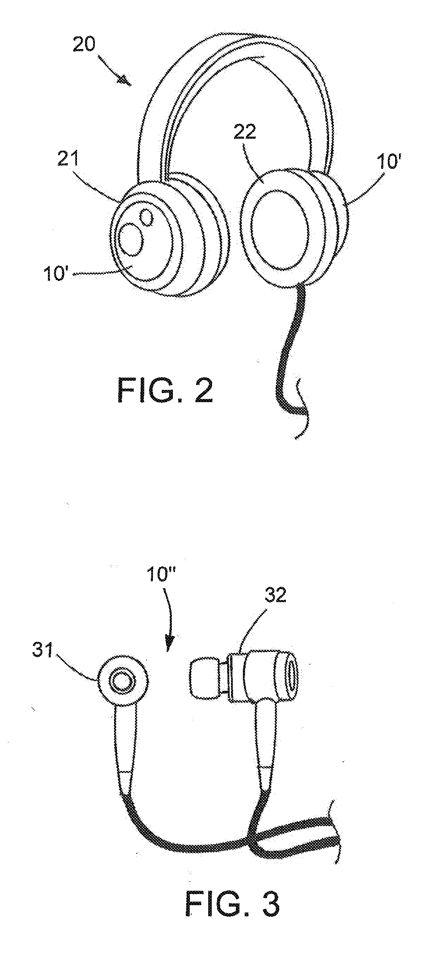

Briefly, turning to Fig. 2 an exemplary embodiment of personal listening device 10' is in the form of a headset 20 that includes a pair of earphones 21, 22 that are mounted on a holder 23. The form factor of the headset 20 is such that the holder may fit over the top above the head of a person while the earphones 21, 22 are positioned over or adjacent the respective ears of the person. Such style headset is of a conventional form factor style. The respective earphones 21, 22 may be both of a type of personal listening device 10 that is illustrated in Fig. 1; alternatively only one of the earphones may be of the personal listening device 10 type and the other may be a conventional earphone.

In Fig. 3, another personal listening device 10" is illustrated. The personal listening device 10" includes a pair of ear buds 31, 32. One or both of the ear buds 31, 32 may be of a type like that illustrated as the personal listening device 10 in Fig. 1.

It will be appreciated that the personal listening device 10 may take various forms, styles, form factors, and so on, such as that illustrated in Fig. 1, those illustrated in Figs. 2 or 3, some other form that is operative to carry out the functions of the personal listening device described herein.

In the following description, an embodiment of a personal listening device 10 in use with a portable electronic device 11 in the form of a mobile phone is presented. It will be appreciated that this presentation is exemplary and that the personal listening device 10 and the operation of a personal listening device as described herein may be used in other environments other than with a portable electronic device 11. In use with a mobile phone as the portable electronic device 11, the personal listening device 10 may be placed adjacent a person's ear, e.g., in the manner that earphones 21, 22 (Fig. 2) typically may be placed adjacent a person's ear; e.g., in a manner that ear buds 31, 32 (Fig. 3) typically may be placed partly in the ear or ear canal of a person, or, if appropriately designed more fully within the ear canal of a person than the distance that an ear bud typically is placed. The manner of placement of the personal listening device may depend on the form factor and intended use of the personal listening device.

A user may listen to various sounds that are provided by the mobile phone 11 via the speaker 13 with the personal listening device placed relative to the ear, e.g., as was described above. The sounds may be music, some other recording, the received Part of a conversation with a person participating in a telephone conversation, and so on.

The user may provide a mechanical input to the housing of the personal listening device 10, for example, by tapping on the housing 12 or providing some other type of disturbance to the personal listening device. The sensor 14 senses such disturbance and provides an indication thereof to the mobile phone 11. The different types of disturbances may be provided, e.g., a different number of taps, a different sequence of taps, e.g., changing the spacing between respective taps, changing the strength of the tap, and so on. Depending on the character of the disturbance(s) the portable electronic device 11 may appropriately respond to carry out a given function or the like.

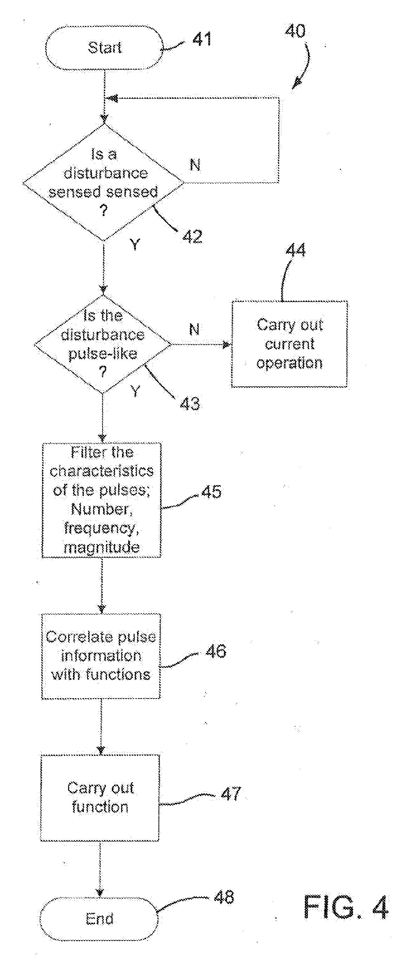

Turning to Fig. 4, a logic diagram or flow chart 40 is illustrated. The logic diagram 40 includes a number of illustrative steps or procedures that may be carried out in the course of using the listening device 10 with the mobile phone 11. The logic diagram 40 is exemplary, and it will be appreciated that additional steps or modifications to the illustrated steps may be included in the logic diagram and process in operating the personal listening device 10 and mobile phone 11. Also, one or more of the illustrated steps in the logic diagram 40 may be omitted and/or replaced by one or more other steps, depending on manner in which the personal listening device 10 and mobile phone 11 are used by a user.

The steps illustrated in the process or procedure represented by the logic diagram 40 may be carried out using the personal listening device 10 and appropriate circuitry and/or computer program software and/or other components, such as those that, for example, are included in a mobile phone 11.

At block 41 the process represented by the logic diagram 40 starts or begins. At block 42 an inquiry is made whether a disturbance has been sensed at the personal listening device 10, such as, for example, a tap against the housing 12, or some other disturbance, examples of which are described further below. If not, then a loop is followed to continue inquiring.

If a disturbance is sensed at block 42, then at block 43 an inquiry is made whether the disturbance is pulse-like or of some other predefined character or intended type of disturbance. If the disturbance is not of a predefined character, then at block 44, the current operation or function of the personal listening device 10 and the portable electronic device 11 may continue to be carried out. For example, if a telephone conversation was being carried out, music was being listening to, and so on, that operation may continue.

However, if at block 43 it is determined that the disturbance is pulse-like or is some other predefined disturbance that is recognized, then at block 45 the character of the pulses, such as, for example, the number of pulses, frequency of the pulses, magnitude of the pulses, coding, e.g., long pulses and short pulses, loud pulses and/or relatively quieter pulses and so on, is filtered and determined or recognized. At block 46 the character of the pulses, then, are correlated with functions that may be carried out by the personal listening device 10 and/or the mobile phone 11. At block 47 that function is carried out. At block 48 the process represented by the logic 40 ends. At this point the personal listening device 10 and the portable electronic device may carry on or operate in response to the control function determined according to the recognized disturbance or may return to carry on or to operate as it was prior to the applied disturbance, as may be desired.

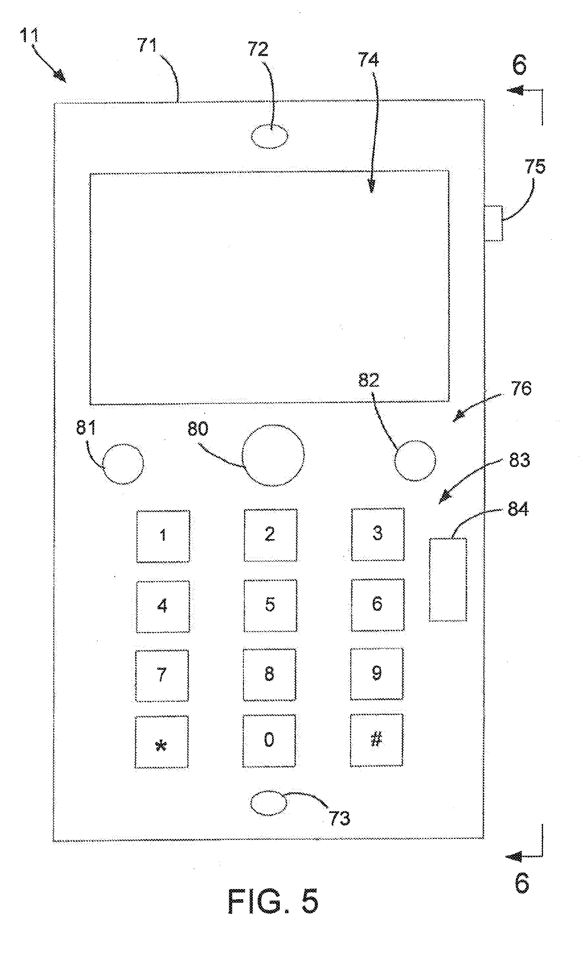

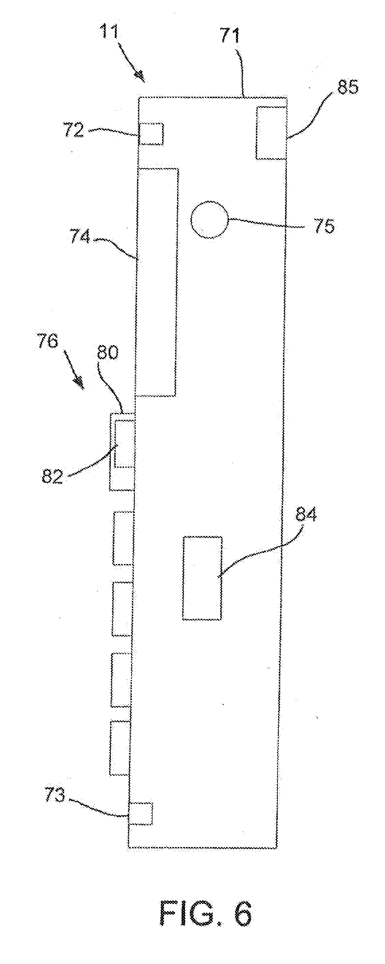

Referring to Figs. 5, 6 and 7, an example of a mobile phone 11 type portable electronic device is illustrated with a connection 65 to the personal listening device 10. A plug-in terminal 65 having male 65m and female 65parts provides electrical connection between the personal listening device 10 and the mobile phone 11. As shown, the male part 65m is a plug and the female part 65f is a jack with a switch function. One or more electrical wires or leads 66 are coupled via the connection 65 to the speaker 13 in the personal listening device 10 to provide signals causing sound to be produced for a user to listen to those sounds, e.g., music, telephone conversation, etc., as is mentioned elsewhere herein. One or more electrical wires or leads 15 couple the sensor 14 of the personal listening device 10 via the connection 65 to the mobile phone 11. If desired, the connection 65 may be eliminated and a wireless connection provided between the personal listening device 10 and the mobile phone 11.

As an example, the connection 65 may be of a type that has a switch function, for example, such that when the male part 65m is not plug into the female part 65f, sounds are played by the mobile phone through the internal speaker (identified more particularly below by reference numeral 72) of the mobile phone and the personal listening device would not have any effect on the mobile phone 11. However, with the male part 65m plugged into the female part 65f, a connection to the internal speaker 72 of the mobile phone 11 would be interrupted and instead a connection is made via electrical leads 66 to the speaker 13 in the personal listening device 10 for a user to hear the sounds from the mobile phone 11. Also, with the male part 65m plugged into the female part 65f, a connection from the sensor 14 and/or the circuitry 16 of the personal listening device 10, to operating circuitry (described below with respect to reference numeral 84) of the mobile phone.

It will be appreciated that other types of connections may be made between the personal listening device 10 and the mobile phone 11 in addition to or instead of the connections provided by connection 65 described just above..

The mobile phone 11, for example, includes case (housing) 71, speaker 72, microphone 73, display 74, e.g., liquid crystal display, light emitting diode display, or other display, on/off switch 75, and a number of keys generally indicated at 76. The keys 76 may include a number of keys having different respective functions. For example, the key 80 may be a navigation key, selection key or some other type of key; the keys 81, 82 may be, for example, one or more soft switches or soft keys; and the keys 85 may be dialing keys. As an example, the navigation key 80 may be used to scroll through lists shown on the display 74, to select one or more items shown in a list on the display 74, etc. The soft switches 81, 82 may be manually operated to carry out respective functions, such as those shown or listed on the display 74 in proximity to the respective soft switch or selected by the navigation key 80, etc. The display 74 may include a GUI on which a number of different icons representing respective functions, applications or the like (collectively referred to as functions below), e.g., camera, email, calendar, contacts, messages, games, etc., and the navigation key 80 may be used to point to a given function, application, etc., and either the navigation key and/or the soft keys, for example, may be used to select the function to cause it to carry out its task or the like. If the display 74 is a touch sensitive display, the pressing of an icon also can select the given function or application represented by the touched icon. The soft keys 81, 82 may be used to initiate a phone call, e.g., to connect to a wireless telephone circuit and to transmit a telephone number, etc., to answer an incoming phone call, to take a photograph (e.g., to provide a shutter release function to store electronically an image received by the camera 83 lens, to transmit a text message, etc., to end a phone call, and/or to carry out other functions.

The dialing keys 83 may be used to dial a telephone number or to input alphanumeric or other data. The speaker 72, microphone 73, display 74, and keys 76 may be used and function in the usual ways in which a mobile phone typically is used, e.g. to initiate, to receive and/or to answer telephone calls, to send, to receive and to review text messages and email, to connect with and carry out various functions via a network, such as the Internet or some other network, to beam or otherwise to transfer information between mobile phones, etc. These are examples; there may be other uses that currently exist or may exist in the future. The mobile phone 11 also includes operating circuitry 84 that responds to programming and to inputs, e.g., provided by a user pressing a key or applying a stylus or finger to a touch-sensitive screen of the display 74, etc. or provided from an external source, such as an incoming telephone call or text message, to carry out functions of the mobile phone.

The operating circuitry 84 may respond to inputs from the personal listening device 10 (Fig. 1) when the personal listening device is connected, e.g., via the connection 65, and leads 15 to the mobile phone. Such inputs may be provided directly from the sensor 14 via leads 15 and/or via the circuitry 16 (Fig. 1).

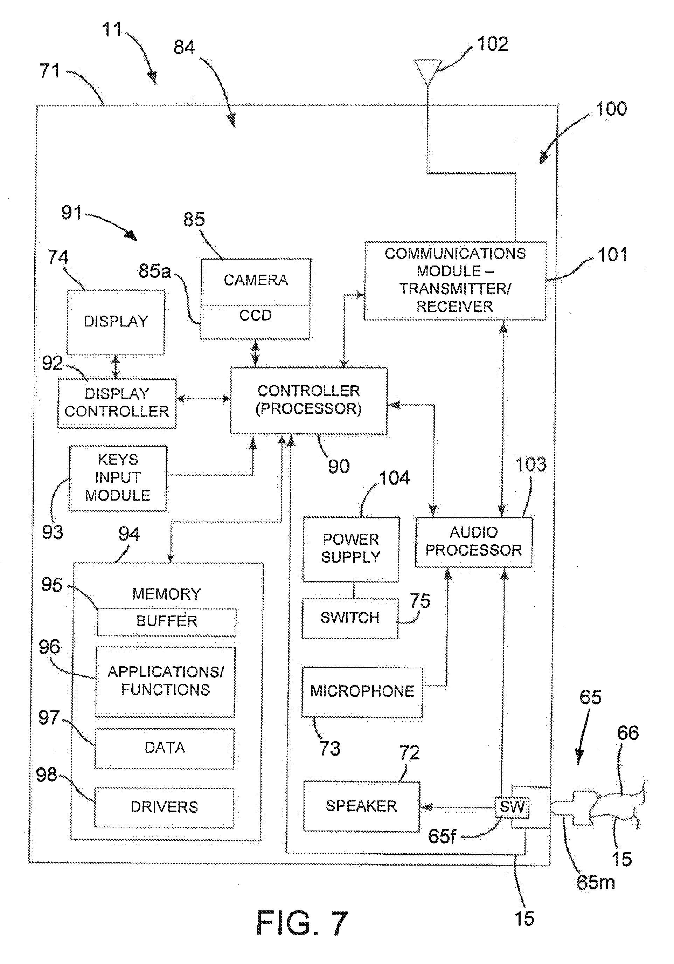

In Fig. 7, a schematic block diagram of the operating circuitry or system 3 of the mobile phone 11 is illustrated. The illustration is exemplary; other types of circuitry may be employed in addition to or instead of the operating circuitry 84 to carry out the various telecommunication and other functions of a mobile phone. The operating circuitry 84 includes a controller 90 (sometimes referred to as a processor or as an operational control and may include a microprocessor or other processor device and/or logic device) that receives inputs and controls the various parts and operation of the operating circuitry. An input module 92 provides inputs to the controller 90. The input module includes the camera 83, a display controller 92, and a keys input module 93.

The camera 85 may include a lens, shutter, image sensor, such as, for example, a CCD (charge coupled device) 85a, a CMOS device, or another image sensor. Images that are sensed by the image sensor may be provided the controller 90 for use in the manner described further below.

The display controller 92 responds to inputs from a touch sensitive display 74 or from another type of display that is capable of providing inputs to the controller. Thus, for example, touching of a stylus or a finger to a part of a touch sensitive display, e.g., to select a song in a displayed list of songs, to select a contact in a displayed list of contacts, to select an icon or function in a GUI shown on the display may provide an input to the controller in conventional manner. The display controller 92 also may receive inputs from the controller 90 to cause images, icons, information, etc., to be shown on the display 74. The keys input module 93, for example, may be the keys 76 themselves and/or may be signal conditioning, decoding or other appropriate circuitry to provide to the controller 90 information indicating the operating of one or more keys 76 in conventional manner.

A memory 94 is coupled to the controller 90. The memory may be a solid state memory, e.g., read only memory (ROM), random access memory (RAM), SIM card, etc., or memory that maintains information even when power is off and that can be selectively erased and provided with more data, an example of which sometimes is referred to as an EPROM or the like. The memory may be some other type device. The memory 94 includes a buffer memory 95 (sometimes referred to herein as buffer). The memory 94 may include an applications or functions storing section or function 96 to store applications programs and functions programs or routines for carrying out operation of the mobile phone 11 via the controller 90. The memory 94 also may include a data storage section or function 97 to store data, e.g., contacts, numerical data, pictures, and/or virtually any other data for use by the mobile phone 11. A drivers section 98 of the memory 94 may include various drivers for the mobile phone 11, for communication functions and/or for carrying out other functions of the mobile phone.

The buffer 95 may be used to save photographs from the camera 83 and/or for other purposes. The buffer 95 may be a part of the memory 94, e.g., specified address locations in a memory device, or part of the data storage section 97, etc., may be a separate memory device in the mobile phone 11, or may be otherwise provided to carry out the functions described further below.

The mobile phone 11 includes a telecommunications portion 100. The telecommunications portion 100 includes, for example, a communications module ― transmitter/receiver 101 that receives incoming signals and transmits outgoing signals via antenna 102. The communications module ― transmitter/receiver 101 is coupled to the controller 90 to provide inputs to and to receive output signals, as may be the case in conventional mobile phones. The communications module ― transmitter/receiver 101 also is coupled to the speaker 72 and microphone 73 via an audio processor 103 to provide audio output via the speaker and to receive audio input from the microphone for usual telecommunications functions. The speaker 72 and microphone 73enable a user to listen and to speak via the mobile phone 11. Audio data may be passed to the audio processor 103 from the memory 94 via the controller for playback to the user. The audio data may include, for example, audio data from an audio file stored in the memory 94 and retrieved by the controller 90. The audio processor 103 may include any appropriate buffers, decoders, amplifiers and the like.

The mobile phone 11 also includes a power supply 104 that may be coupled to provide electrical power to the operational circuitry 3 upon closing of the on/off switch 75.

Turning back to Figs. 1-4, the housing 12 holds the personal listening device components together. It contains the speaker 13 and the sensor 14. The sensor is capable of transducing, sensing, detecting, etc. an input applied to the housing 12, e.g., a mechanical input, such as tapping or other mechanical inputs mentioned herein or still others that one may use and such as the mentioned electrostatic/capacitive coupling type input. No button is needed to provide an input to the housing 12.

If a single or multiple tapping or thumping on the earphone (personal listening device) 10 were to occur, a sound may be produced. The sound is distinct from normal sound that the speaker 13 is producing, as the tap is an abrupt action causing an abrupt or impulse-like or pulse-like sound. The tap may be relatively a fast or short duration occurrence to facilitate discerning the tap(s) from conventional sounds coming from the speaker 13 and ambient noise or sounds that may be in the local environment where the personal listening device is located. Also, the disturbance caused by the tap, etc. is a temporary disturbance, not a continuous voice conversation, music playing, etc.

The tapping or other input may be a single tap or may be several taps. The number of taps, the time between taps, the strength of the taps, and so on may be used to provide prescribed inputs to the personal listening device 10 to cause respective outputs therefrom and/or outputs from and/or functions carried out by the mobile phone 11. As an example, the pulses may represent a code, such as one or more long or loud pulses followed by one or shorter or relatively quieter pulses. As is mentioned elsewhere herein, an accelerometer type sensor 14 may be used to detect sudden position changes, and electric field or capacitive coupling between the personal listening device 10 and the human body may be used as an output representing an input to the personal listening device. Such electrostatic or capacitive coupling is not stable and constant; it is sensitive to positioning, orientation, geometry, and so on of the personal listening device 10; and it can be used as an output from the personal listening device, e.g., as it is tapped, moved, pushed to change position, etc. Moreover, the speaker 13 can be used as a microphone in a reverse sense if it is not being used at the moment for providing a sound output.

The described tapping, for example, is a force that is applied to the housing 12, not to the electrical leads, cord or the like that may be connected electrically to the personal listening device 10.

The input to the housing 12 may be a squeezing action. Although that squeezing may not produce a sound, the squeezing may be sensed by a mechanical strain gage type sensor 14 or by a mechanical.

It will be appreciated that in a sense the inputs to the housing 12 of the personal listening device 10 are somewhat digital in character, e.g., being impulses, etc., as was mentioned above, as compared to the more analog output typically provided by the speaker as music, conversation, and so on and as compared to ambient noise or sounds.

Also, as was mentioned above, an accelerometer type sensor 14 may be used. Such accelerometer alone or in combination with circuitry 16, which may be in the personal listening device 10 and/or in mobile phone 11, would respond to inputs that are sudden or abrupt changes in position or motion of the personal listening device. Relatively slowly occurring motions, such as gradual nodding of the head of a user, typically would not be of a type of motion used as an input to the housing of the personal listening device.

The circuitry 16 may be a filter circuit that transmits signals representing a desired character, such as, for example, relatively short pulses, and tends to block relatively slow changing, e.g., more analog type, signals from being recognized as inputs to the personal listening device. A person having ordinary skill in the art would be able in a reasonable time to prepare such a filter circuit that passes the appropriate signals. If desired, the circuitry 16 may include computer program software that carries out the desired function of passing desired type signals and not transmitting the relatively slow speech, music, etc. type signals. Further instead of the circuitry 16 and/or software for providing the signal selection or filter function being in the personal listening device 16, it/they may be in the mobile phone 11. Still further, separate circuitry may not be required to carry out the filter function; rather, the mobile phone 11 may include software to carry out the filter function in the memory, processor, and/or other existing circuitry of the mobile phone. Thus, it will be appreciated that the filter function may be carried out by hardware, software or a combination thereof.

The filter function mentioned above may be carried out using circuitry 16 and/or software either in the personal listening device 10, in the mobile phone 11, or partly or fully in both. As is illustrated, there are respective conductive paths between the personal listening device 10 and the mobile phone 11, one path to conduct signals to cause the speaker 13 to produce sound and the other path to conduct signals representing inputs to the housing of the personal listening device, thus providing two respective channels for signals between the personal listening device and the mobile phone. If the speaker 13 also is used as a sensor 14, then its conductive path in effect provides function for both mentioned channels.

The filter function in a sense may be carried out in the temporal direction and not as much as a frequency filter. Since a tap is analogous to an impulse action, the sensor 14 tends to sense the occurrence of the tap rather than the frequency of the tap to provide a signal to the mobile phone 11. However, if the frequency characteristics of taps, e.g., different frequencies occurring when the housing 12 is tapped at different locations, those frequencies may be used to distinguish both that tapping is occurring and what function is to be carried out as a result of the frequency of a given tap. Also, if the frequency of the sound, for example, or other sensed disturbance is known, either accurately or approximately, such information may be used to avoid confusing temporary disturbances that occur to the housing 12 that are not intended inputs thereto, e.g., by bumping an edge rather than a longer side of the personal listening device, etc. Moreover, the filter function may include a time dimension consideration, for example, such that a pulse longer than a prescribed duration, e.g., several seconds, more than one half second, or some other duration, may be used to indicate that the pulse is not to be considered a tap.

It will be appreciated that a person who has ordinary skill in the art in a reasonable time would be able to prepare software and/or circuitry to carry out the appropriate signal analysis and filtering function to carry out the above-described functions of handling signals according the character of the signals.

Various techniques may be used to cause a desired response in the mobile phone 11 to the signals representing inputs to the personal listening device 10. For example, a lookup table may be included in the memory 94 (Fig. 7) to correlate the character of the inputs (taps, for example) with functions intended to be carried out by the mobile phone 11. Thus, for example, a single tap of a given amplitude may cause a given function to be carried out by the mobile phone, e.g., answer an incoming phone call, another number of taps of a given amplitude or of different amplitudes may cause music to be played or songs to be changed, and so on.

Features and functions that are described above may be used in electronic devices other than personal listening devices and/or other than mobile phones. An advantageous aspect permits a user to tap on or otherwise provide an input to a device without concern for accurately aiming the tap or other input. It is enough to tap, for example, to obtain the desired input. A user would not have to look at the device or reposition the eyes when providing the tap or other input. The surface of the device may be relatively smooth without the need for moving parts to provide the input and to detect the input.; the design of the product does not have to be altered to take into consideration location for a movable button or switch; the result is a clean surface for the device without the need for optics, buttons or switches. The sensor 14, such as a microphone, may be glued to the inside of the device without the need for buttons, switches or the like that might destroy the integrity of the exterior surface of the device. If desired, an array of microphones may be used as sensors 14; such array of microphones may be strategically positioned in the device to discern the location at which tapping or other input is being applied to the exterior surface of the device. Pictures may be provided on the exterior surface to indicate what is the function that would be carried out when a given location on the device is tapped.

The invention may be used in information kiosks, on surfaces that may become scratched without concern for the integrity of the surface, as there is no need for a button or switch to penetrate through the surface; one could paint on the surface.

The invention may be used to detect tapping on the case of a portable computer. The invention may be used to provide inputs to a device in the dark since the precise location of applying the tapping need not be accurately required. There is no need to know precisely where to tap to apply the input or to find a button to press to cause the desired response from the device.

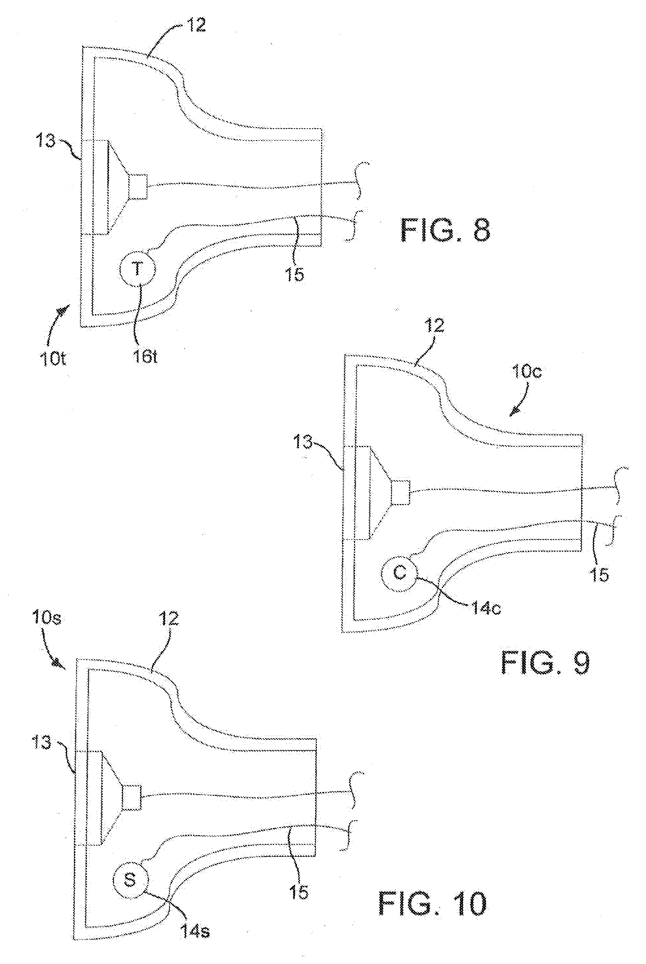

Briefly referring to Figs. 8, 9 and 10, several embodiments of personal listening devices 10t, 10c, 10s are illustrated schematically. The difference between these personal listening devices and the personal listening device 10 illustrated in Fig. 1 is, as follows:
In Fig. 8, the sensor 14 is a transducer, such as an accelerometer 14t.
In Fig. 9, the sensor 14 is an electrostatic sensing/capacitive coupling sensing device 14c.
In Fig. 10 the sensor 14 is a strain gage 14s.

These different respective sensors and their functions are described above.
It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

Any process or method descriptions or blocks in flow charts may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The logic and/or steps represented in the flow diagrams of the drawings, which, for example, may be considered an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminals, computers, servers, networks and the like described above may be virtually any type and that the computer code may be prepared to carry out the invention using such apparatus in accordance with the disclosure hereof.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A personal listening device, comprising
a housing,
a speaker, and
a sensor configured to provide an output representative of an input applied to the housing,

2. The device of claim 1, wherein the sensor is configured to detect a sudden abrupt change causing a disturbance to the housing.

3. The device of either one of claims 1 or claim 2, further comprising a filter for preventing the providing of such an output in response to relatively long, slow inputs to the housing.

4. The device of any one of claims 1-3, wherein the sensor is configured to provide a prescribed output in response to a tapping force applied to the housing.

5. The device of any one of claims 1-4, wherein the sensor comprises a capacitive coupling device configured to provide a prescribed output representative of capacitive coupling with a user of the device.

6. The device of any one of claims 1-5, wherein the sensor is configured to provide an output representative of a squeezing of the housing.

7. The device of any one of claims1-6, wherein the sensor comprises at least one of a force transducer, a mechanical impulse sensor, a strain gage or an accelerometer.

8. The device of any one of claims 1-7, wherein the sensor is configured to detect a sudden change in the location of the housing.

9. The device of any of claims 1-8, wherein the device is configured to be worn on the head of a person, and the sensor is configured to sense motion of the head of such person.

10. The device of any one of claims 1-9, wherein the sensor comprises a microphone in the housing.

11. The device of any one of claims 1-14, wherein the sensor comprises the speaker and filter circuitry and/or filtering software to distinguish between signals representing usual sounds to be output by the speaker and disruptive mechanical inputs applied to the housing.

12. The device of any one of claims 1-11, further comprising a memory configured to store information representing the character of respective mechanical inputs and respective functions to be carried out in response to the occurrence of such respective mechanical inputs, and a processor configured to compare the character of sensed mechanical inputs with information representing the character of respective mechanical inputs from the memory, and in response to a correlation to carry out a corresponding function.

13. The device of any of claims 1-12, wherein the memory comprises a look up table to provide a reference profile of inputs for comparison, and wherein the look up table includes a correspondence between inputs and functions to be carried out in response to such inputs.

14. The device of any one of claims 1-13, wherein the housing and speaker are configured as an ear bud, earphone or headphone.

15. A method of providing a signal for operating a device comprising applying an input to a housing of the device and sensing the input applied to the housing for use in providing a control or operational function of the device or of a remote device.
